Europäisches Patentamt

European Patent Office

Office européen des brevets

(11) Veröffentlichungsnummer: **0 269 552**
**A1**

## (12) EUROPÄISCHE PATENTANMELDUNG

(21) Anmeldenummer: 87710019.8

(22) Anmeldetag: 06.11.87

(51) Int. Cl.⁴: **F 16 J 15/02**
**F 15 B 13/02**

(30) Priorität: 06.11.86 DE 3637830

(43) Veröffentlichungstag der Anmeldung:
01.06.88 Patentblatt 88/22

(84) Benannte Vertragsstaaten: **DE FR GB IT SE**

(71) Anmelder: **Parker-Prädifa GmbH**
**Arnold-Jäger-Strasse 1**
**D-7120 Bietigheim-Bissingen (DE)**

(72) Erfinder: **Lorber, Gerd**
**Altenbachweg 6**
**D-7120 Bietigheim-Bissingen (DE)**

(74) Vertreter: **Wolff, Michael, Dipl.-Phys.**
**Kirchheimer Strasse 69**
**D-7000 Stuttgart 75 (DE)**

(54) **Dichtungsanordnung.**

(57) Die Dichtungsringe (keine O-Ringe mehr) sind durch die einseitig verstärkten Ränder von, ein bestimmtes Lochbild ergebenden, zylindrischen Durchbrüchen einer biplanaren, d.h. hauptsächlich durch zwei ebene Flächen charakterisierten, Platte gebildet sind, die mehrere Durchbrüche zur Befestigung des Wegeventiles an einem Aggregat aufweist, wobei alle Dichtungsringe nun zusammenhängen und gcmeinsam handhabbar sind, und die Breitseite der Platte die empfindliche Anschlußfläche des Wegeventiles schützt.

Fig. 1

EP 0 269 552 A1

## Beschreibung

Gegenstand der Erfindung ist eine Dichtungsanordnung mit wenigstens zwei Dichtungsringen, die in je eine koplanare zylindrische Erweiterung eines Bohrungsendes einsetzbar sind, wobei die Dichtungsringe flexibel miteinander verbunden sind.

Wegeventile gemäß DIN 24300 weisen eine ebene Anschlußfläche auf, an der die mit O-Ringen besetzten zylindrischen Erweiterungen der äußeren Enden von Anschlußsackbohrungen jedes Wegeventiles, ein Lochbild gemäß DIN 24340 bestimmend, ins Freie münden. An dieser Anschlußfläche (und der ihr gegenüberliegenden parallelen Seitenfläche) des Ventiles münden auch mehrere durchgehende Bohrungen des Wegeventiles, zu dessen Befestigung an einer an der Gehäuse-Anschlußfläche anliegenden, parallelen, das gleiche Lochbild aufweisenden Gegenanschlußfläche des mit dem Ventil zu versehenden Hydraulik- oder Pneumatik-Aggregates.

Diese Dichtungsanordnung für Wegeventile ist mit mehreren Nachteilen behaftet: die als O-Ringe verwendeten Dichtungsringe müssen einzeln in die dafür vorgesehenen Vertiefungen des Ventilgehäuses eingesetzt werden, wo sie aber bei fehlender radialer Vorspannung nicht haften, sondern verlorengehen können; es ist möglich,den Einsatz eines der einzelnen Dichtungsringe zu vergessen, sodaß die Gefahr mangelhafter Erstabdichtung besteht; das Einsetzen mehrerer vereinzelter Dichtungsringe erfordert ein Vielfaches der Zeit für die Montage eines einzigen Dichtungselementes; der Bewirtschaftungsaufwand, insbesondere zur Lagerung der Dichtungsringe, ist relativ groß; es besteht die Gefahr, daß ein einzelner Dichtungsring bei Unterdruck in die zugeordnete Bohrung hineingezogen wird; es können infolge einer Werkstoffverwechslung Dichtungsringe verschiedenen Materials zu einer dann nicht gleichmäßig belastbaren Dichtungsanordnung zusammengesetzt werden; die geläppte Anschlußfläche des Ventilgehäuses ist von Hause aus ungeschützt und muß mttels eines separaten Teiles bedeckt werden, bis das Ventil montiert wird; das Auswechseln eines defekten Dichtungsringes erfordert zwar geringeren Materialaufwand als das Auswechseln aller Dichtungsringe, welches jedoch im Interesse einer gleichmäßigen Abdichtung und des Vermeidens eines vielleicht schon bald notwendig werdenden Auswechselns eines anderen Dichtungsringes doch satzweise zu erfolgen hat, sodaß das Auswechseln aller Dichtungsringe verhältnismäßig zeitaufwendig ist; der Widerstand des einzelnen Dichtungsringes gegen seine Extrusion in die zugeordnete Bohrung, die an der Aggregat-Gegenanschlußfläche mündet, ist gering.

Es ist auch eine Tankabdichtung mittels einer Dichtungsanordnung der eingangs genannten Art bekannt, deren Dichtungsringe in Gestalt von O-Ringen durch radiale Stege aus gleichem Material zu einer baulichen Einheit zusammengefaßt sind. Die Stege, die beispielsweise bei drei O-Ringen ein Y bilden, werden in nutförmige Vertiefungen versenkt, welche die zur Aufnahme der Dichtungsringe bestimmten Bohrungserweiterungen miteinander verbinden.

Der Erfindung liegt die Aufgabe zugrunde, eine Dichtungsanordnung, insbesondere für Wegeventile, zu schaffen, welche von den zuvor erwähnten Nachteilen im wesentlichen frei ist.

Diese Aufgabe ist ausgehend von der zur Tankabdichtung bestimmten, bekannten Dichtungsanordnung der eingangs genannten Art erfindungsgemäß dadurch gelöst, daß die Dichtungsringe durch die einseitig verstärkten Ränder von, ein bestimmtes Lochbild ergebenden, zylindrischen Durchbrüchen einer biplanaren Platte gebildet sind, die mehrere Befestigungsdurchbrüche aufweist. Dadurch werden folgende Vorteile erreicht: die an die Ventil-Anschlußfläche angedrückte Platte vermittelt auch schon ohne Vorspannung der Dichtungsringe deren Haftung am Ventilgehäuse; da die ganze Dichtungsanordnung einstückig ausgebildet ist, kann kein Dichtungsring versehentlich weggelassen werden; die Montage der ganzen Dichtungsanordnung beansprucht nur wenig mehr Zeit als die Montage eines einzelnen Dichtungsringes; es sind nicht mehr mehrere einzelne Dichtungsringe, sondern nur noch die ganze Dichtungsanordnung als Einheit zu bewirtschaften, insbesondere zu lagern; ein Einziehen eines Dichtungsringes bei Unterdruck ist ebenso wenig möglich wie dessen Extrusion; es kann nicht mehr vorkommen, daß Dichtungsringe verschiedenen Materials kombiniert werden, da die ganze Dichtungsanordnung aus einem einheitlichen Material besteht; die Platte schützt ohne weiteres die Ventil-Anschlußfläche; das Auswechseln der Dichtungsringe erfolgt in einem einzigen, einfachen, kurzen Arbeitsgang.

Es sind sogenannte Gummi-Metall-Komplettdichtungen bekannt, bei denen O-Ringe aus Gummi derart in eine Befestigungsdurchbrüche aufweisende, biplanare Metallplatte, z.B. aus Aluminium, "integriert" sind, daß die Gummidichtungsringe die Ränder von nach einem bestimmten Lochbild geordneten Bohrungen für den Fluiddurchtritt säumen, wobei sich die O-Ringe beidseitig über die planparallelen Plattenflächen erheben. Im Unterschied dazu ist die erfindungsgemäße Dichtungsanordnung auf einer ihrer beiden Breitseiten völlig eben und aus nur einem Material erzeugt, das flexibel ist, sodaß die erforderliche Elastizität der Dichtungsringe gegeben ist.

Bei einer bevorzugten Ausführungsform der erfindungsgemäßen Dichtungsanordnung sind die Dichtungsringe mit radialelastischer Vorspannung in die Erweiterungen einsetzbar, sodaß die Dichtungsanordnung auch ohne Adhesion ihrer Platte an der geleppten Ventil-Anschlußfläche auf dieser haftet, da die Dichtungsringe eine Art Druckknopfverbindung der Platte zum Ventilgehäuse herstellen.

Bei der bevorzugten Ausführungsform sind die erhabenen Stirnflächen der Dichtungsringe konisch geformt, damit sich die Dichtungsringe einem Spritzwerkzeug leichter entformen lassen; der Anpreßdruck sorgt dennoch für eine Anlage der gesamten Stirnfläche jedes Dichtungsringes am Grund der zugeordneten Bohrungserweiterung.

Im folgenden ist die Erfindung anhand der durch die Zeichnung beispielhaft dargestellten bevorzugten Ausführungsform der erfindungsgemäßen Dichtungsanordnung im einzelnen erläutert. Es zeigt:

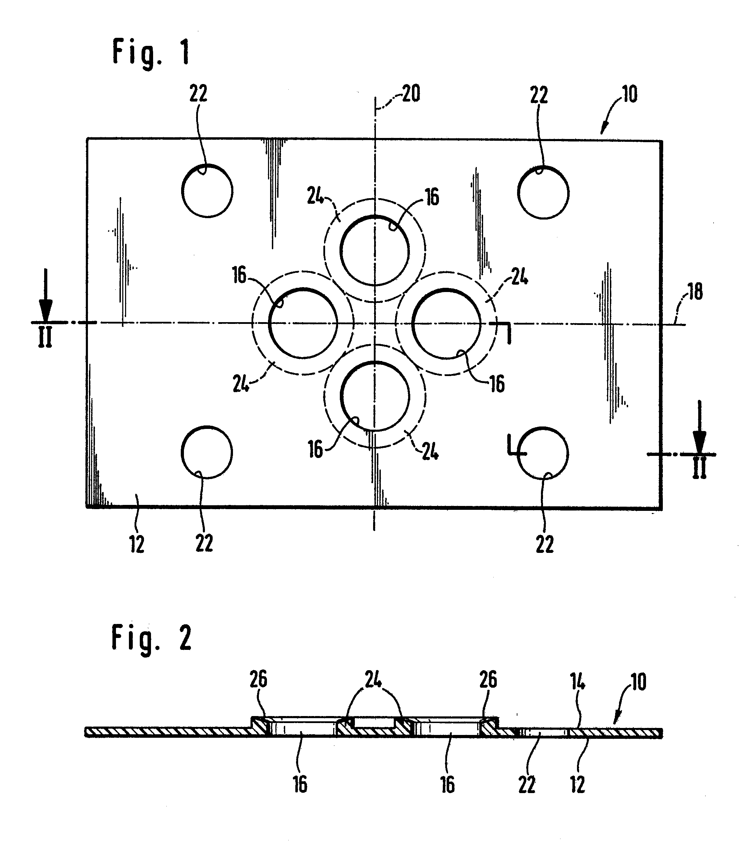

Fig. 1 eine Draufsicht auf die Ausführungsform und

Fig. 2 einen zweifach abgewinkelten Längsschnitt durch die Ausführungsform nach der Linie II-II in Fig. 1.

Im Ausführungsbeispiel weist die erfindungsgemäße Dichtungsanordnung eine im Grundriß rechteckige, biplanare Platte (10) mit zwei planparallelen, je mehrfach zusammenhängenden Oberflächen (12 und 14) auf ihren beiden Breitseiten auf, von denen die nicht mit Erhebungen versehene, die Außenseite der Platte (10) bildende Oberfläche (12) zur Anlage an der Gegenanschlußfläche eines mit einem Wegeventil zu versehenden Hydraulik- oder Pneumatik-Aggregates bestimmt ist, während die mit kreisringförmigen Erhebungen versehene, die Innenseite der Platte (10) bildende andere Oberfläche (14) zur Anlage an der ebenen Anschlußfläche des Gehäuses des Wegeventiles bestimmt ist.

Die einschließlich der erwähnten Erhebungen in einem einzigen Spritzvorgang aus Polyurethan einstückig biegsam gefertigte Platte (10) weist in ihrem Zentrum vier mit ihren Mittelpunkten auf die Ecken eines Quadrates verteilte, gleich große Bohrungen (16) auf, von denen je zwei mit ihren Mittelpunkten auf der längeren und kürzeren Mittellinie (18 bzw. 20) der äußeren Plattenoberfläche (12) liegen. Während diese Bohrungen (16) dem Durchtritt des Fluides dienen, das aus dem Wegeventil in das Aggregat und umgekehrt eintritt, sind vier kleinere periphere Bohrungen (22), die den Ecken der Platte (10) zugeordnet sind, zur Aufnahme von Schraubelementen bestimmt, mittels deren das Wegeventil unter Einklemmung der Platte (10) am Aggregat befestigt wird.

Der kreisrunde Rand jeder der größeren Bohrungen (16) ist von einem im Grundriß kreisförmigen Dichtungsring (24) gesäumt, der radial innen die zylindrische Mantelfläche der zugeordneten Bohrung (16) axial fortsetzt, und radial außen ebenfalls eine zylindrische Mantelfläche aufweist, die sich axial ein wenig weiter von der inneren Plattenoberfläche (14) weg erstreckt, sodaß jeder Dichtungsring (24) eine konkave, schwach konisch gestaltete Stirnfläche (26) aufweist, die sich an den Grund einer zylindrischen Erweiterung des Endes einer Bohrung im Ventilgehäuse anlegt, sobald der Dichtungsring (24) in die Erweterung gedrückt wird, deren Durchmesser und Tiefe der Außendurchmesser des Dichtungsringes (24) bzw. dessen Erhebung über die innere Plattenoberfläche (14) angepaßt ist.

## Patentansprüche

1.) Dichtungsanordnung mit wenigstens zwei Dichtungsringen, die in je eine koplanare zylindrische Erweiterung eines Bohrungsendes einsetzbar sind, wobei die Dichtungsringe flexibel miteinander verbunden sind, dadurch **gekennzeichnet,** daß die Dichtungsringe ( 24 ) durch die einseitig verstärkten Ränder von, ein bestimmtes Lochbild ergebenden, zylindrischen Durchbrüchen ( 16 ) einer biplanaren Platte ( 10 ) gebildet sind, die mehrere Befestigungsdurchbrüche ( 22 ) aufweist.

2.) Dichtungsanordnung nach Anspruch 1, dadurch gekennzeichnet, daß die Dichtungsringe ( 24 ) mit radialelastischer Vorspannung in die Erweiterungen einsetzbar sind.

3.) Dichtungsanordnung nach Anspruch 1 oder 2, dadurch gekennzeichnet, daß die erhabenen Stirnflächen ( 26 ) der Dichtungsringe ( 24 ) konisch geformt sind.

0269552

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH-A- 445 908 (DEUTSCHE AKADEMIE DER WISSENSCHAFTEN ZU BERLIN) <br> * Spalte 3, Zeile 42 - Spalte 4, Zeile 6; Figuren 1-5 * <br> --- | 1-3 | F 16 J 15/02 <br> F 15 B 13/02 |
| Y | FR-A-2 543 248 (FESTO) <br> * Insgesamt; Figuren 1-5 * <br> --- | 1-3 | |
| A | US-A-3 407 846 (BRANDENBERG) <br> * Spalte 2, Zeile 27 - Spalte 3, Zeile 65; Figuren 1-9 * <br> ----- | 1 | |
| | | | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 09-02-1988 | LEGER M.G.M. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument

........................................................

& : Mitglied der gleichen Patentfamilie, übereinstimmendes
   Dokument